# EUROPEAN PATENT APPLICATION

(11) **EP 4 830 832 A1**
(43) Date of publication of application: **28.10.2026**
(21) Application number: 24907992.2
(22) Date of filing: 16.12.2024
(51) Int. Cl.: B01J 21/02, B01J 35/77, B01J 35/34, C22B 26/12, C22B 3/24, B01D 15/08

(54) **LITHIUM ADSORBENT**

(30) Priority: 18.12.2023 KR 20230185150
(71) Applicant: POSCO Holdings Inc., Pohang-si, Gyeongsangbuk-do 37859 (KR)
(72) Inventor: KUK, Seung Taek, Pohang-si, Gyeongsangbuk-do 37859 (KR); PARK, Woonkyoung, Pohang-si, Gyeongsangbuk-do 37859 (KR); YANG, Heok, Pohang-si, Gyeongsangbuk-do 37859 (KR); PARK, Jaesin, Pohang-si, Gyeongsangbuk-do 37859 (KR); KIM, Ju Young, Pohang-si, Gyeongsangbuk-do 37859 (KR); JUNG, Myungwon, Pohang-si, Gyeongsangbuk-do 37859 (KR)
(74) Representative: Pfenning, Meinig & Partner mbB
(86) International application number: PCT/KR2024/020445
(87) International publication number: WO 2025/135709

(57) **Abstract**

The present invention relates to a lithium adsorbent, and provides a lithium adsorbent that is an aluminum hydroxide-based compound and has a crystallite size obtained by a Scherer equation of 15 nm or more.

## Description

### [TECHNICAL FIELD]

The present invention relates to a lithium adsorbent.

### [BACKGROUND ART]

Methods for recovering lithium from brine include an evaporation method, a method using chemicals, and the like, but in most cases, impurities are removed in advance from brine mixed with impurities, and a high-concentration lithium solution is obtained to obtain a useful lithium compound.

Recently, research has been actively conducted to recover lithium from geothermal brine or oilfield brine by utilizing direct lithium extraction technology (DLE technology).

Among direct lithium extraction technologies, a representative method is a method using a lithium adsorbent.

A lithium adsorbent can selectively recover only lithium from brine mixed with impurities, and is therefore advantageous for lithium recovery as compared with an evaporation method, which takes a long time, or a chemical method, which consumes a large amount of auxiliary raw materials and generates by-products. However, data on long-term repeated operation have not yet been known, and further research is required for commercialization.

### [DETAILED DESCRIPTION OF THE INVENTION]

### [Technical Problem]

An object of the present invention is to provide a long-life lithium adsorbent for commercialization.

### [Technical Solution]

In one embodiment of the present invention, provided is a lithium adsorbent that is an aluminum hydroxide-based compound and has a crystallite size obtained by the Scherer equation of 15 nm or more.

The crystallite size may be in a range of 15 nm to 50 nm.

The lithium adsorbent may maintain a crystallite size of 15 nm or more after 1,000 cycles of adsorption and desorption.

The lithium adsorbent may maintain a crystallite size after 1,000 cycles of adsorption and desorption at 60% or more relative to an initial crystallite size.

The lithium adsorbent may have a change in strength of 15% or less after 1,000 cycles of adsorption and desorption.

The crystallite size obtained by the Scherer equation may be obtained by the following Equation 1. [Equation 1] $τ = Kλ / βcosθ$
τ: crystallite size (average size, nm)
K: shape factor (dimensionless number, determined by the actual shape of the crystal)
λ: X-ray wavelength (nm)
β: half width of the FWHM of the maximum-intensity peak (unit: radian)
θ: X-ray incident angle (°)

The aluminum hydroxide-based compound may be represented by the following Chemical Formula 1.

[Chemical Formula 1] LiA·xAl(OH)₃·nH₂O

wherein, in Chemical Formula 1, A is at least one of halogen elements, 0<x<5, and 0<n<10.

### [Advantageous Effects]

A long-life adsorbent for commercialization can be provided. Accordingly, operation costs of process facilities can be reduced.

### [BRIEF DESCRIPTION OF THE DRAWINGS]

FIG. 1 shows XRD data of an adsorbent prepared according to an Example and an adsorbent subjected to about 1,000 or more cycles of adsorption and desorption.
FIGS. 2 and 3 show XRD data of conventional adsorbents.
FIG. 4 shows SEM photographs of an initial adsorbent and an adsorbent after about 1,000 or more cycles of adsorption and desorption.
FIG. 5 shows adsorption performance evaluation results according to the number of adsorption and desorption cycles.
FIG. 6 shows strength performance evaluation results according to the number of adsorption and desorption cycles.

### [BEST MODE FOR CARRYING OUT THE INVENTION]

Hereinafter, embodiments of the present invention will be described in detail. However, these are presented as examples, and the present invention is not limited thereby, and the present invention is defined only by the scope of the claims to be described below.

LiCl·2Al(OH)₃·nH₂O, which is a lithium adsorbent, includes pores into which lithium can enter in Al(OH)₃ double layers, and Cl ions or water is present between the layers.

When adsorption proceeds, lithium ions are adsorbed into the pores, and Cl ions gather between the layers in this manner. When desorption proceeds, lithium ions are desorbed together with Cl ions between the layers and are recovered in the form of LiCl. At this time, since other impurities are not adsorbed, more efficient lithium recovery is possible.

The lithium adsorbent according to one embodiment of the present invention may be a lithium adsorbent that is an aluminum hydroxide-based compound and has a crystallite size obtained by the Scherer equation of 15 nm or more.

The crystallite size may be in a range of 15 nm to 50 nm. The initial crystallite size of the prepared adsorbent may affect long life.

When adsorption and desorption are repeated, the crystallite size may gradually decrease.

The lithium adsorbent may maintain a crystallite size of 15 nm or 20 nm or more after 1,000 cycles of adsorption and desorption. Accordingly, performance at a certain level or higher can be secured even when the adsorbent is used for a long time.

Specifically, the lithium adsorbent may maintain a crystallite size after 1,000 cycles of adsorption and desorption at 60% or more relative to an initial crystallite size.

In addition, the lithium adsorbent may have a change in strength of 15% or less after 1,000 cycles of adsorption and desorption. When the strength of the adsorbent changes, deformation occurs in the structure of a pellet, causing a problem in maintaining a process, and adsorption performance is also affected.

The crystallite size obtained by the Scherer equation may be obtained by the following Equation 1. [Equation 1] $τ = Kλ / βcosθ$
τ: crystallite size (average size, nm)
K: shape factor (dimensionless number, determined by the actual shape of the crystal)
λ: X-ray wavelength (nm)
β: half width of the FWHM of the maximum-intensity peak (unit: radian)
θ: X-ray incident angle (°)

The aluminum hydroxide-based compound may be represented by the following Chemical Formula 1.

[Chemical Formula 1] LiA·xAl(OH)₃·nH₂O

wherein, in Chemical Formula 1, A is at least one of halogen elements, 0<x<5, and 0<n<10.

An Al-based layered lithium adsorbent, LiCl·2Al(OH)₃·nH₂O, may be obtained by quantitatively mixing AlCl₃·nH₂O and LiCl in distilled water and then adding NaOH.

More specifically, it may be manufactured through the following process.

A method for manufacturing an aluminum-based lithium adsorbent according to one embodiment includes introducing an aqueous sodium hydroxide solution into a mixed solution of aluminum chloride and lithium chloride, and manufacturing a lithium adsorbent through a one-step reaction of the mixed solution and the aqueous sodium hydroxide solution.

First, a mixed solution of aluminum chloride and lithium chloride is prepared.

The mixed solution is prepared by adding aluminum chloride and lithium chloride to distilled water such that a molar ratio of aluminum chloride to lithium chloride is in a range of 1:1 to 4:1, more specifically 2:1 to 3:1, and dissolving them.

When the molar ratio of aluminum chloride and lithium chloride satisfies the above range, a pH range reaches 5 to 10, and at this time, the yield of the synthesized adsorbent is highest.

This coincides with a condition in which solubility of aluminum hydroxide, which is a main compound of the adsorbent, is lowest. When the pH is below this range, the adsorbent becomes in a state having almost no filterability, and it becomes difficult to implement characteristics as an adsorbent.

At this time, the mixed solution may be stirred. The stirring may be performed to a level at which the solution can flow.

More specifically, stirring may be performed at a level of 100 rpm to 1,000 rpm.

Next, the aqueous sodium hydroxide solution is introduced into the mixed solution.

Specifically, the introduction of the aqueous sodium hydroxide solution may be performed by introducing all of a necessary amount at once, or by uniformly introducing a predetermined amount for 30 minutes to 90 minutes.

At this time, when the aqueous sodium hydroxide solution is introduced at once, synthesis of an adsorbent having a size of several nm is possible. In addition, when a predetermined amount is uniformly introduced for 30 minutes to 90 minutes, synthesis of an adsorbent having a size of several hundred nm is possible.

As described above, a difference according to the method of introducing the aqueous sodium hydroxide solution causes a difference in the amount of binder particles introduced in a molding process to be described below. That is, in the case of an adsorbent having a size of several nm, the binder input content increases as compared with an adsorbent having a size of several hundred nm.

A process of introducing a predetermined amount of the aqueous sodium hydroxide solution at a constant rate, that is, a process of uniformly introducing a predetermined amount for 30 minutes to 90 minutes, may be performed, for example, at 30 ml/min to 100 ml/min. When the aqueous sodium hydroxide solution is introduced into the mixed solution under these conditions, there is an advantage that particle sizes distributed in the adsorbent can be controlled and a homogeneous lithium adsorbent having good crystallinity can be obtained.

Meanwhile, the aqueous sodium hydroxide solution is prepared by dissolving sodium hydroxide in water to have a concentration of 4 M to 8 M, more specifically 5 M to 8 M. When the concentration of the aqueous sodium hydroxide solution satisfies the above range, crystalline-phase powder having good adsorption characteristics can be manufactured.

Subsequently, the lithium adsorbent may be manufactured through a one-step reaction of the mixed solution and the aqueous sodium hydroxide solution.

The reaction may be performed at a temperature in a range of 50°C to 150°C and at a speed of 200 rpm to 1000 rpm. More specifically, the reaction is preferably performed at a temperature in a range of 60°C to 100°C and at a speed of 300 rpm to 700 rpm for 1 hour to 3 hours.

When these reaction conditions are satisfied, aluminum hydroxide generated by addition of sodium hydroxide and lithium chloride react to be generated in a slurry form, and lithium ions are bonded to the aluminum hydroxide, thereby synthesizing the adsorbent.

The one-step process includes a process of washing the lithium adsorbent slurry.

The process of washing the lithium adsorbent slurry may be performed, for example, using washing water in an amount of 3 times to 10 times the weight of the lithium adsorbent slurry.

As the washing water, for example, at least one of distilled water or general tap water may be used.

In the present embodiment, the reaction and the process of washing the lithium adsorbent slurry may be performed simultaneously. Accordingly, since a separate washing process is not performed, the process can be simplified, and accordingly, productivity of the aluminum-based lithium adsorbent is improved.

More specifically, the washing process is to wash a cake obtained after solid-liquid separation of the lithium adsorbent slurry through reduced-pressure filtration or the like.

By performing the washing process under such conditions, sodium chloride (NaCl) included in the cake can be washed. In addition, through such a washing process, adsorption sites of the lithium adsorbent can be activated.

Next, the washed cake is dried in a dryer for at least 8 hours, specifically 8 hours to 48 hours. When the moisture content of the cake is at a level of 60%, drying can be performed in 8 hours, but when the moisture content is 60% or more, a drying process of 48 hours or more is required.

The drying process is preferably performed in a range of 40°C to 60°C, more specifically 45°C to 50°C. When the temperature of the drying process satisfies the above range, the composition of the adsorbent does not change, and thus a lithium adsorbent having excellent adsorption performance can be manufactured. This is because, when the temperature of the drying process exceeds 60°C, the properties of aluminum hydroxide change, and the properties as an adsorbent cannot be maintained.

Meanwhile, the method for manufacturing an aluminum-based adsorbent according to the present embodiment may further include a molding process after manufacturing the lithium adsorbent.

The molding process may be performed, for example, by molding the lithium adsorbent into a pellet-type cylindrical shape. The pellet-type cylindrical lithium adsorbent may be manufactured, for example, by an extrusion process.

More specifically, the extrusion process is a method in which a fluid raw-material dough is filled in a cylinder and extruded through a mold having a predetermined shape to be continuously molded. At this time, a binder may be introduced into the lithium adsorbent manufactured by the above-described method to manufacture a dough form having a predetermined viscosity, and the dough form may be used as the raw-material dough.

Next, the lithium adsorbent molded according to the shape of the mold may be implemented to have a predetermined cross-sectional shape such as a rectangle, a circle, or a T shape.

Meanwhile, as an extruder used for the extrusion, for example, a screw type and a piston type may be used.

The screw type has an advantage of being able to push out dough having high viscosity by the force of a screw, and the piston type has weaker force than the screw type, but is advantageous for extruding a complicated shape such as a honeycomb shape.

The most important factor in extrusion is the state of the raw-material dough. When the viscosity is too low, there is a problem that the strength of the molded lithium adsorbent is weak, and when the viscosity is too high, there is a problem that productivity decreases.

Therefore, it is important to manufacture the raw-material dough with an appropriate viscosity.

That is, molding may be performed using the lithium adsorbent manufactured by the above-described method, but the lithium adsorbent molded in this manner may be broken during a process in which adsorption and desorption are continuously repeated with a lithium-containing solution.

Therefore, a lithium adsorbent molded to maintain a certain strength and shape may be manufactured by mixing an organic or inorganic binder with the lithium adsorbent manufactured by the method according to one embodiment.

As the binder that can be used in the molding process according to the present embodiment, for example, a non-aqueous binder that is at least one of polyvinyl chloride, vinyl chloride, polyethylene, and combinations thereof may be used. Alternatively, a solvent and a binder used for non-aqueous ceramic molding may be mixed with the above-described lithium adsorbent and extrusion-molded.

Meanwhile, in a currently commercialized aluminum-based adsorbent, a lithium adsorbent is synthesized by a method of adsorbing lithium chloride, lithium sulfate, lithium nitrate, and the like to aluminum hydroxide, and then lithium is adsorbed in a lithium-containing solution and desorbed using water to extract lithium.

In particular, an adsorbent to which lithium chloride is bonded is synthesized by first synthesizing aluminum hydroxide, washing reaction by-products such as sodium chloride or ammonium chloride, and then adsorbing lithium chloride thereto to synthesize a final lithium adsorbent.

The lithium adsorbent synthesized by such a method has low filterability, and thus it is difficult to repeat lithium adsorption and desorption processes. Therefore, in order to solve such a problem, a method of molding into a specific shape or size and then bringing the molded product into contact with a lithium adsorption solution has been proposed. However, when there is no flow of the solution, the lithium adsorption amount is low, and thus there is a problem that it is difficult to directly apply the molded product to a lithium adsorption process.

In addition, in order to solve such a problem, a process may be configured by immersion in a flowable solution. However, even in this case, before lithium is adsorbed, an activation process of forming a space in which lithium can be adsorbed is performed to obtain a final adsorbent, and therefore several processes must be performed, and there was a problem that lithium adsorption performance decreases during this process.

However, in the present embodiment, synthesis of the lithium adsorbent is performed as a one-step process, and because activation of adsorption sites in the lithium adsorbent is possible by including a washing process in the one-step process, there is no need to perform a separate activation process, and thus the process can be remarkably simplified. Furthermore, adsorption performance of the lithium adsorbent manufactured in this way is also significantly improved as compared with a conventionally commercialized aluminum-based lithium adsorbent.

### [MODE FOR CARRYING OUT THE INVENTION]

Hereinafter, preferred Examples and Comparative Examples of the present invention will be described. However, the following Examples are merely preferred embodiments of the present invention, and the present invention is not limited to the following Examples.

### Example

A lithium adsorbent may be manufactured in the form of LiCl·2Al(OH)₃·nH₂O by adding NaOH to a mixed solution of AlCl₃·nH₂O and LiCl using a one-step method.

Specifically, a 50% NaOH solution was introduced at a rate of 35 mL/min. When the input capacity increased, the solution was introduced at a rate of about 0.8 to 1.5 wt%/min. This is a rate slowed by about 20 to 30 times as compared with the conventional rate.

The manufactured adsorbent was filtered and dried in an oven at 40°C to 60°C, and the dried adsorbent was mixed with a binder in a powder form to form a dough form and manufactured into a pellet form using a molding machine. The manufactured adsorption molded body was filled into a 100 mL column, and adsorption and desorption were repeated 1,000 or more times to measure performance thereof.

As the brine used for adsorption and desorption, simulated brine having the same composition as real brine at a lithium level of 1 g/L was manufactured and used.

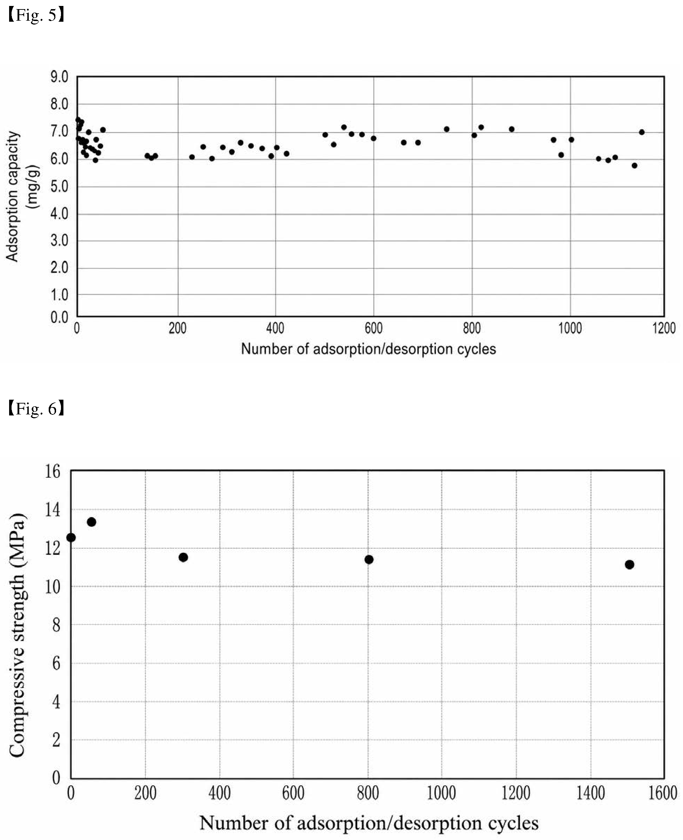

FIG. 5 is a graph showing values calculated for adsorption capacity by measuring the lithium concentration of the filtrate during adsorption and desorption. Adsorption capacity is defined as the amount of lithium adsorbed per weight (g) of the adsorbent. In the experimental results, the present adsorbent maintained an adsorption capacity at a level of 6 mg/g during repeated testing of 1,000 or more cycles, and, as shown in FIG. 5, the strength also maintained, even when repeated 1,000 or more times, a level decreased by about 11% after about 300 cycles of adsorption and desorption from the initial level.

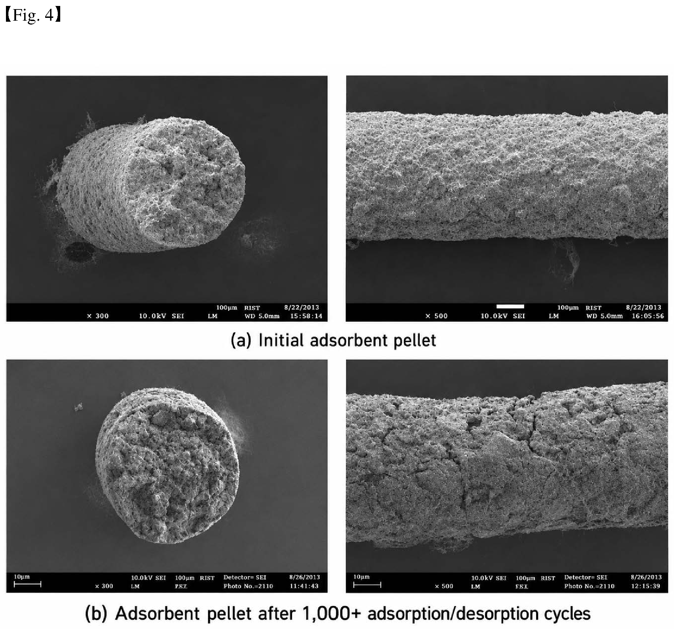

However, in FIG. 4, it can be seen that pores of the pellet increased as compared with the initial adsorbent pellet, which indicates that the adsorbent was damaged to some extent after 1,000 or more repetitions.

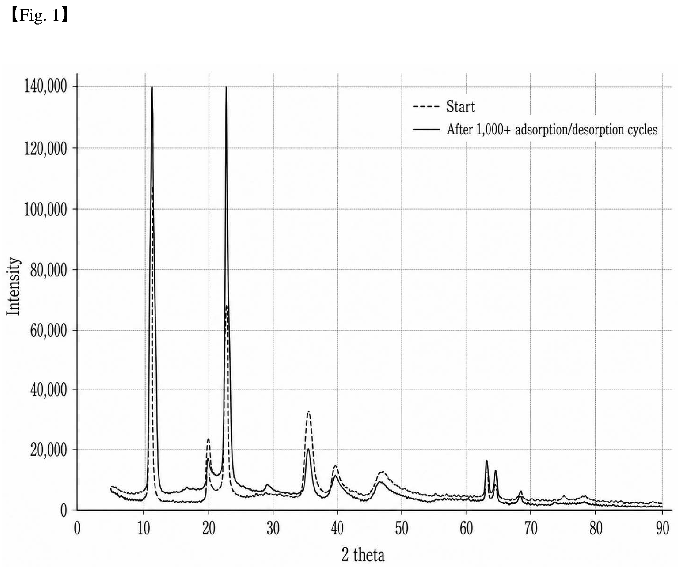

Looking at the XRD results of FIG. 1, it can be confirmed that the widths of the peaks generally increased. This means that the crystallite size of the adsorbent decreased, and as a result, it can be understood that the adsorbent surface is damaged when operated for a long time.

The crystallite size can be determined by the Scherer equation, which is an equation indicating that FWHM (Full Width at Half Maximum) and crystallite size have an inverse proportional relationship. [Equation 1] $τ = Kλ / βcosθ$

Here, the meaning of each symbol is as follows.
τ: average size of crystallites
K: shape factor (dimensionless number), about 0.9 but varies depending on the actual shape of the crystal.
λ: X-ray wavelength
β: half width of the FWHM of the maximum-intensity peak (unit: radian)
θ: X-ray incident angle
When the crystallite of 2θ = 11.5°, which is a representative peak of the present adsorbent, is calculated according to this equation, it can be seen that the initial crystallite size was about 32 nm, and after 1,000 or more cycles of adsorption and desorption, the size was 21 nm, and thus the size decreased by about 34%. However, in view of the fact that there was no large change in other performance, it was confirmed that the crystallite size was maintained at a certain level.

Strength measurement was performed using a compressive strength measuring instrument. The results are shown in FIG. 6.

An adsorbent pellet was placed on the measuring instrument, and pressure was gradually increased. At the moment when the pellet was damaged, the instrument pressure dropped, and this pressure value was defined as compressive strength.

When it was assumed that a height of an adsorbent column to be used in an actual process was 2 m, the pressure applied onto the adsorbent pellet positioned at the lowermost side in a state filled with a solution and the adsorbent was calculated and found to be about 1.3 MPa. Considering other additional pressure factors, it was estimated that, if the pressure was 10 MPa or more, there would be no problem in terms of compressive strength of the adsorbent.

### Comparative Example

From XRD results described in two foreign patents, the crystallite size can be calculated through representative peaks at the same position for lithium adsorbents.

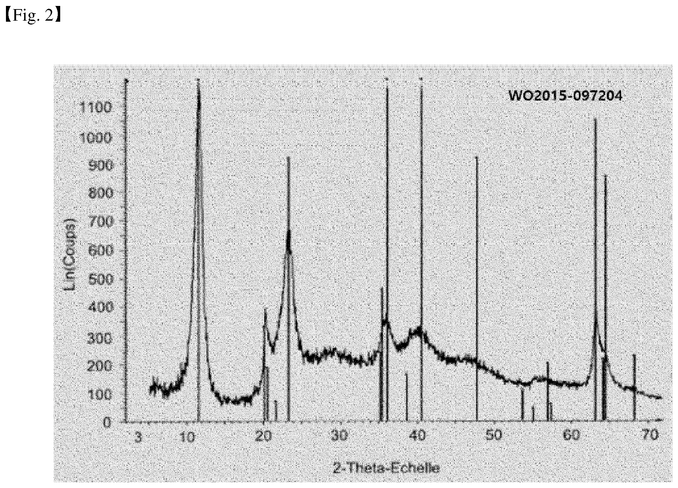

FIG. 2 shows XRD results described in Patent WO2015-097204. From this, it can be seen that the crystallite size is at a level of 7.5 nm.

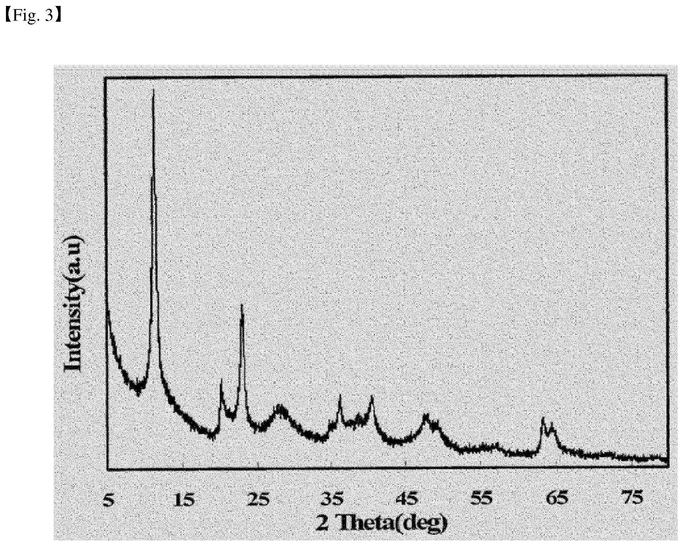

FIG. 3 shows the crystallite size of a lithium adsorbent of another patent, CN 101829538. From this, it can be seen that the crystallite size is about 14 nm.

Since the crystallite size decreases when adsorption and desorption are repeatedly performed for a long time, if the initial crystallite size is small, the lifespan may eventually be short.

The present invention is not limited to the above embodiments and may be manufactured in various different forms. A person having ordinary skill in the art to which the present invention pertains will understand that the present invention may be embodied in other specific forms without changing the technical spirit or essential features of the present invention. Therefore, the above-described embodiments should be understood as illustrative in all respects and not restrictive.

## Claims

1. A lithium adsorbent,
which is an aluminum hydroxide-based compound, and
has a crystallite size obtained by a Scherer equation of 15 nm or more.

2. The lithium adsorbent of claim 1,
wherein the crystallite size is in a range of 15 nm to 50 nm.

3. The lithium adsorbent of claim 1,
wherein the lithium adsorbent maintains a crystallite size of 15 nm or more after 1,000 cycles of adsorption and desorption.

4. The lithium adsorbent of claim 1,
wherein the lithium adsorbent maintains a crystallite size after 1,000 cycles of adsorption and desorption at 60% or more relative to an initial crystallite size.

5. The lithium adsorbent of claim 1,
wherein the lithium adsorbent has a change in strength of 15% or less after 1,000 cycles of adsorption and desorption.

6. The lithium adsorbent of claim 1,
wherein the crystallite size obtained by the Scherer equation is obtained by the following Equation 1. [Equation 1] $τ = Kλ / βcosθ$
τ: crystallite size (average size, nm)
K: shape factor (dimensionless number, determined by the actual shape of the crystal)
λ: X-ray wavelength (nm)
β: half width of the FWHM of the maximum-intensity peak (unit: radian)
θ: X-ray incident angle (°)

7. The lithium adsorbent of claim 1,
wherein the aluminum hydroxide-based compound is represented by the following Chemical Formula 1.
[Chemical Formula 1] LiA·xAl(OH)₃·nH₂O
wherein, in Chemical Formula 1, A is at least one of halogen elements, 0<x<5, and 0<n<10.
